**Europäisches Patentamt**

**European Patent Office**

**Office européen des brevets**

(19)

(11) Veröffentlichungsnummer : **0 216 749 B2**

(12) **NEUE EUROPÄISCHE PATENTSCHRIFT**

(45) Veröffentlichungstag der neuen Patentschrift :
**24.06.92 Patentblatt 92/26**

(51) Int. Cl.⁵ : **B60K 17/34, F16D 35/00**

(21) Anmeldenummer : **86890251.1**

(22) Anmeldetag : **08.09.86**

(54) Getriebeeinheit zwischen den getriebenen Achsen eines Kraftfahrzeuges.

Die Akte enthält technische Angaben, die nach dem Eingang der Anmeldung eingereicht wurden und die nicht in dieser Patentschrift enthalten sind.

(30) Priorität : **13.09.85 AT 2680/85**

(43) Veröffentlichungstag der Anmeldung :
**01.04.87 Patentblatt 87/14**

(45) Bekanntmachung des Hinweises auf die Patenterteilung :
**21.12.88 Patentblatt 88/51**

(45) Bekanntmachung des Hinweises auf die Entscheidung über den Einspruch :
**24.06.92 Patentblatt 92/26**

(84) Benannte Vertragsstaaten :
**DE FR GB IT**

(56) Entgegenhaltungen :
**EP-A- 0 149 302
DE-A- 1 802 456
DE-A- 3 427 566**

(56) Entgegenhaltungen :
**DE-A- 3 533 142
GB-A- 2 126 292
US-A- 3 651 903
August Schalitz: Kupplungs-Atlas, Bauarten und Auslegungen von Kupplungen und Bremsen, 4. geänderte und erweiterte Auflage, A.G.T.-Verlag Georg Thum, 1975, Seite 1
Kraftfahrtechnisches Taschenbuch, 18. Auflage, Bosch, 1976, Seite 312
Bussien, Automobiltechnisches Handbuch, Seiten 289-318, 2. Band von 1965, Technischer Verlag Herbert Cram, Berlin**

(73) Patentinhaber : **STEYR-DAIMLER-PUCH Aktiengesellschaft
Postfach 62 Franz-Josefs-Kai 51
A-1011 Wien (AT)**

(72) Erfinder : **Lanzer, Heribert, Dipl.-Ing.
Hauptstrasse 236
A-8071 Gössendorf (AT)**

(74) Vertreter : **Finck, Dieter
Patentanwälte v. Füner, Ebbinghaus, Finck
Mariahilfplatz 2 & 3
W-8000 München 90 (DE)**

EP 0 216 749 B2

**Beschreibung**

Die Erfindung betrifft eine Getriebeeinheit, nach dem Oberbegriff des Patentanspruchs 1.

Eine solche Getriebeeinheit ist bereits bekannt (GB-A-1 357 106). Dabei ist das Umlaufrädergetriebe als Planetengetriebe ausgebildet, dessen Planetenradträger vom Motor her angetrieben wird. Vom Sonnenrad einerseits und vom Hohlrad anderseits werden die Abtriebe zu den beiden Fahrzeugachsen abgeleitet, wobei diese beiden Glieder des Umlaufräder- bzw. Planetengetriebes außerdem jeweils mit einer Hälfte der Flüssigkeitsreibungskupplung verbunden sind. Hier dient also das Umlaufrädergetriebe als Ausgleichgetriebe zwischen den Fahrzeugachsen, wogegen die Flüssigkeitsreibungskupplung die Aufgabe einer Sperre für das Ausgleichgetriebe übernimmt. Aus derselben Druckschrift ist es auch bekannt, lediglich eine Flüssigkeitsreibungskupplung vorzusehen, die dann für sich allein das Ausgleichgetriebe zwischen den beiden Fahrzeugachsen bildet. Beide Ausführungsvarianten haben verschiedene Nachteile :

Bei Kurvenfahrt, bei der bekanntlich die Räder der beiden Achsen verschiedene Drehzahlen aufweisen, ergibt sich durch die dadurch hervorgerufene Drehzahldifferenz der Kupplungshälften der Flüssigkeitsreibungskupplung ein Verspannungsmoment, das die Fahrzeuglenkung erschwert. Die Lenkung wird besonders schwierig, wenn bei tiefen Temperaturen gefahren wird, weil sich durch die dann hohe Viskosität der in der Flüssigkeitsreibungskupplung enthaltenen Flüssigkeit das Verspannungsmoment vergrößert. Es fehlt vor allem auch die Möglichkeit, die beiden Achsen von ihrer Antriebsverbindung miteinander zu trennen, was aber notwendig wäre, wenn beispielsweise das Fahrzeug mit einer unter Radblockierung angehobenen Achse abgeschleppt oder auf nur für eine Achse ausgelegten Prüfständen getestet werden soll. Auch ein Bremssystem mit Antiblockiereinrichtung erfordert in der Regel die Trennung der beiden Achsen von ihrer gemeinsamen Antriebsverbindung. Da beide Kupplungshälften der Flüssigkeitsreibungskupplung rotieren, ist ein beträchtlicher technischer Aufwand erforderlich, wenn eine Steuerung der Kupplung zur Modulation des Zusammenhanges der Drehzahldifferenz zwischen den Kupplungshälften mit dem übertragbaren Drehmoment mit äußeren Mitteln vorgenommen werden soll.

Demnach liegt der Erfindung die Aufgabe zugrunde, diese Mängel zu beseitigen und eine Getriebeeinheit der eingangs geschilderten Art zu schaffen, bei der beim Lenken auch in der kalten Jahreszeit keine Verspannungsmomente auftreten, die beiden Fahrzeugachsen von ihrer Antribsverbindung untereinander leicht trennbar sind und eine große Modulationsbreite hinsichtlich des Zusammenhanges der Drehzahldifferenz zwischen den Kupplungshälften mit dem übertragbaren Drehmoment erreichbar ist, wobei noch weitere Vorteile erzielbar sein sollen mit dem Merkmalen a-c im kennzeichnenden Teil des Ansprüchs 1.

Auf diese Weise ergibt sich erstmals eine Getriebeeinheit, bei der die zweite Hälfte des Flüssigkeitsreibungsgliedes, das in der Regel das Flüssigsigkeitsgefüllte Gehäuse dieser Kupplung bildet, im Betrieb keine Drehbewegung ausführt. Damit kann aber nun mit einfachen technischen Mitteln von außen in dieses Flüssigkeitsreibunggglied eingegriffen werden, um dessen Charakteristik je nach dem gewünschten Betriebsverhalten zu verändern. Ist die zweite Hälfte der Flüssigkeitsreibungsgliedes nicht bleibend abgestützt, sondern bloß abbremsbar, so kann sie auch mit einfachen technischen Mitteln völlig freigegeben werden, was zufolge der besonderen Anordnung der Getriebeeinheit die Unwirksamkeit des Flüssigkeitsreibungsgliedes und damit die Trennung der beiden Achsen von ihrer Antriebsverbindung miteinander zur Folge hat, so daß dann die Verspannungsmomente infolge unterschiedlicher Achsdrehzahlen sowie die Abschleppschwierigkeiten od.dgl. vermieden werden, ohne in das Flüssigkeitsreibungsglied selbst eingreifen müssen.

In weiterer Ausbildung der Erfindung ist das Flüssigkeitsreibungsglied zur Modulation des Zusammenhanges der Drehzahldifferenz zwischen den Kupplungshälften mit dem übertragbaren Drehmoment, z. B. durch Füllungsgradänderung, Veränderung der Spaltbreite zwischen den Wirkflächen der ineinandergreifenden Kupplungshälften, Innendruckänderung und/oder dgl. in an sich bekannter Weise steuerbar. Auf diese Weise läßt sich auch bei fest abgestützter zweiter kupplungshälfte jedes gewünschte Betriebsverhalten des Flüssigkeitsreibungsgliedes erzielen, wobei die verschiedenen Veränderungsvorgänge innerhalb der Kupplung keine Schwierigkeiten bereiten, weil eben die zweite Kupplungshälfte stillsteht.

Eine andere Variationsmöglichkeit der Charakteristik der gesamten Getriebeeinheit läßt sich dadurch erzielen, daß das Flüssigkeitsreibungsglied aus wenigstens zwei parallelgeschalteten Teilkupplungen besteht, deren zweite Hälften voneinander unabhängig abbremsbar sind. Wenn beispielsweise zwei Teilkupplungen stark unterschiedlicher Charakteristik parallelgeschaltet sind, so läßt sich durch abwechselndes oder gemeinsames Abbremsen der jeweils zweiten Hälften der beiden Teilkupplungen ein ganz verschiedenes Betriebsverhalten der ganzen Getriebeeinheit erreichen, und zwar bei kürzesten Umstellzeiten. Man fährt z. B. im Normalbetrieb mit nur einer Teilkupplung. Wir dann durch Abbremsen der zweiten Kupplungshälfte der anderen Teilkupplung diese dazugeschaltet, so ergibt sich eine sogenannte harte Charakteristik, die beim Fahren mit großer Läst oder beim Bremsen ohne Antiblockiereinrichtung erwünscht ist. Werden die Bremsen der zweiten Kupplungshälften beider Teilkupplungen gelöst, so ist der Kraftfluß zwischen den Fahrzeugachsen überhaupt vollständig unterbrochen und es kann abgeschleppt werden oder es bleibt ein gegebenenfalls vorhandenes Bremssystem mit Antiblockiereinrichtung ungestört. Selbstverständlich wird die Modulationsbreite der Charakteristik der gesamten Getriebeeinheit noch größer, wenn die Teilkupplungen in sich selbständig oder willkürlich steuerbar sind.

Die erfindungsgemäße Getriebeeinheit ist nicht nur zwischen den getriebenen Achsen eines Kraftfahrzeuges, sondern auch un symmetrischer Doppelanordnung als Achsausgleichgetriebe, also als Ausgleichgetriebe zwischen den Rädern ein und derselben Achse anwendbar.

In der Zeichnung ist der Erfindungsgegenstand beispielsweise dargestellt, und zwar zeigen

Fig. 1 eine erfindungsgemäße Getriebeeinheit in ihrem grundsätzlichen Aufbau im Schema,

Fig. 2 das Schema einer Ausführungsvariante und

Fig. 3 die Anordnung der Getriebeeinheit als Ausgleichgetriebe zwischen den getriebenen Achsen eines Kraftfahrzeuges, ebenfalls rein schematisch.

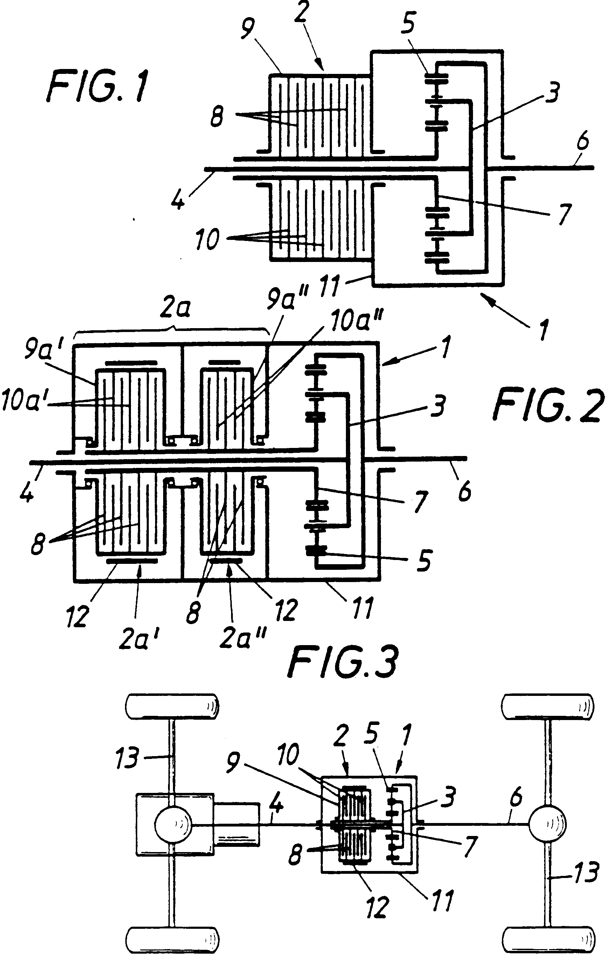

Die erfindungsgemäße Getriebeeinheit besteht aus einem dreigliedrigen Umlaufrädergetriebe, nämlich einem Planetengetriebe 1 und einem Flüssigkeitsreibungsglied 2, wobei das eine Getriebeglied, nämlich der Planetenradträger 3, unmittelbar mit dem Antrieb 4 verbunden ist. Vom Hohlrad 5 wird der Abtrieb 6 abgeleitet, und das Sonnenrad 7 ist drehfest mit der einen Hälfte, nämlich den Innenlamellen 8 des Flüssigkeitsreibungsgliedes 2 verbunden. Gemäß Fig. 1 ist die zweite Kupplungshälfte, die aus dem mit viskoser Flüssigkeit gefüllten Gehäuse 9 und den Außenlamellen 10 besteht, drehfest am Gehäuse 11 der Getriebeeinheit abgestützt. Dabei kann die Charakteristik des Flüssigkeitsreibungsgliedes 2 durch Änderung des Abstandes der Lamellen 8, 10 oder durch Änderung des Füllungsgrades, durch Innendruckänderung oder auf andere Weise von außen her geändert werden.

Gemäß Fig. 2 besteht das Flüssigkeitsreibungsglied 2a aus zwei Teikupplungen 2a', 2a", die parallelgeschaltet sind. Die zweiten Hälften der beiden Teilkupplungen 2a', 2a", also die Gehäuse 9a' und 9a" mit den Außenlamellen 10a', 10a" sind unabhängig voneinander abbremsbar, was jeweils durch ein Bremsband 12 angedeutet ist. Es ist ersichtlich, daß die beiden Teilkupplungen 2a' und 2a" eine unterschiedliche Anzahl von Innen- und Außenlamellen 8 bzw. 10a' bzw. 10a" aufweisen, also von vornherein eine unterschiedliche Charakteristik besitzen.

Fig. 3 läßt die Anordnung der gesmaten Getriebeeinheit zwischen den getriebenen Achsen 13 eines Kraftfahrzeuges erkennen. Dabei ist das Flüssigkeitsreibungsglied 2 wie die beiden Teilkupplungen 2a' und 2a" nach Fig. 2 nicht am Gehäuse 11 fest abgestützt, sondern mit Hilfe eines Bremsbandes 12 abbremsbar.

## Patentansprüche

1. Getriebeeinheit zwischen den getriebenen Achsen (4, 6) eines Rraftfahrzeuges, bestehend aus einem dreigliedrigen, mit An- und Abtrieb verbundenen Planetengetriebe und einem Flüssigkeitsreibungsglied mit Innen- und Außenlamellen und einem diese umgebenden, mit viskoser Flüssigkeit gefüllten Gehäuse, dadurch gekennzeichnet,
a) daß das Sonnenrad (7) des Planetengetriebes - wie an sich bekannt - mit den Innenlamellen (8) des Flüssigkeitsreibungsgliedes verbunden ist,
b) daß die Außenlamellen (10; 10a', 10a") und das bleibend damit drehfest verbundene Gehäuse (9) des Flüssigkeitsreibungsgliedes (2) am Gehäuse (11) der Getriebeeinheit drehfest abgestützt oder abbremsbar ist und
c) daß ein einziger Abtrieb (6) vorgesehen und vom Hohlrad (5) des Planetengetriebes (1) abgeleitet ist.

2. Getriebeeinheit nach Anspruch 1, dadurch gekennzeichnet, daß das Flüssigkeitsreibungsglied (2 ; 2a) zur Modulation des Zusammenhanges der Drehzahldifferenz zwischen den Kupplungshälften (8; 9, 10 bzw. 9a, 10a) mit dem übertragbaren Drehmoment, z. B. durch Füllungsgradänderung, Veränderung der Spaltbreite zwischen den Wirkflächen der ineinandergreifenden Kupplungshälften (8, 9 ; 8, 9a), Innendruckänderung und-/oder dgl. in an sich bekannter Weise steuerbar ist.

3. Getriebeeinheit nach Anspruch 1 oder 2, dadurch gekennzeichnet, daß das Flüssigkeitsreibungsglied (2a) aus wenigstens zwei parallelgeschalteten Teilkupplungen (2a'; 2a") besteht, deren zweite Hälften (9a', 10a' ; 9a", 10a") voneinander unabhängig abbremsbar sind.

## Claims

1. A transmission unit between the driven axles (4,6) of a motor vehicle, consisting of a three-membered epicyclic gear train (1) connected to drive and output and of a liquid friction member comprising internal and external disks (and encased by a housing filled with a viscous liquid characterized in that,

    a) the sun gear (7) of the epicyclic gear is connected to the internal disks (8) of the liquid friction member - as known per se,

    b) the external disks (10;10a',10a'') and the housing (9) that is permanently non-rotatably connected to the external disks (10;10a',10a'') are non-rotatably supported on the housing (11) of the transmission unit or adapted to be braked and

    c) a single output (6) is provided and derived from the ring gear (5) of the epicyclic gear train (1).

2. A transmission unit according to claim 1, characterized in that for a modulation of the interrelation of the speed difference between the halves (8;9,10 or 9a, 10a) of the coupling and the transmittable torque, the liquid friction member (2;2a) is adapted to be controlled in a known manner, e.g. by a change of the degree of filling, a change of the width of the gap between the active surfaces of the interdigitating coupling halves (8,9;8,9a), by a change of the internal pressure and/or the like.

3. A transmission unit according to claim 1 or 2, characterized in that the liquid friction member (2a) consists of at least two coupling parts (2a';2a''), which are connected in parallel and the second halves (9a',10a';9a'',10a'') of which are adapted to be braked independently of each other.

## Revendications

1. Unité de transmission entre les essieux entrainés (4,6) d'un véhicule à moteur, se composant d'une transmission à pignons satellites à trois éléments reliée à l'organe menant et à l'organe mené et d'un membre à friction hydraulique comportant des lamelles interieures et extérieures entourées d'un carter rempli d'un fluide visqueux, caractérisée

    a) en ce que la roue planétaire (7) est reliée aux lamelles intérieures (8) du membre à friction hydraulique, comme en soi connu,

    b) en ce que les lamelles extérieures (10;10a',10a'') et le carter (9) du membre à friction hydraulique relié à demeure à ceux-ci sont appliqués contre le carter de l'unité de transmission pour être immobilisés en rotation ou sont susceptibles d'être freinés et

    c) en ce qu'un seul organe mené est prévu et est dérivé de la couronne à denture intérieure (5) de la transmission à pignons satellites (1).

2. Unité de transmission à engrenages selon la revendication 1, caractérisée en ce que le membre à friction hydraulique (2,2a), peut être commandée de manière connue en soi, pour la modulation de la relation de la différence des vitesses de rotation entre les demi-accouplements (8;9,10;9,10a respectivement) avec le couple de rotation transmis par exemple par le changement du degré de remplissage, par le changement de l'écartement entre les surfaces actives des demi-accouplements (8,9;8a,9a) agissant l'un dans l'autre, par la modification de la pression intérieure et/ou par des moyens similaires.

3. Unité de transmission à engrenages selon la revendication 1, caractérisée en ce que le membre à friction hydraulique (2a) se compose d'au moins deux accouplements partiels (2a',2a'') montés en parallèle, dont les deuxièmes moitiés (9a',10a';9a'',10a'') sont susceptibles d'être freinées indépendamment l'une de l'autre.

FIG.1

FIG.2

FIG.3